# EUROPÄISCHE PATENTANMELDUNG

(11) **EP 3 306 154 A1**
(43) Veröffentlichungstag der Anmeldung: **11.04.2018**
(21) Anmeldenummer: 16799317.9
(22) Anmeldetag: 25.05.2016
(51) Int. Cl.: F16K 11/052, F16K 3/22, F16K 3/26

(54) **THERMOMANAGEMENTMODUL UND DREHSCHIEBER DAFÜR**

(30) Priorität: 25.05.2015 CN 201510270052
(71) Anmelder: Schaeffler Technologies AG & Co. KG, 91074 Herzogenaurach (DE)
(72) Erfinder: NGUYEN, Van Hau, Shanghai 201702 (CN); SCHMALER, Jens, 01829 Stadt Wehlen (DE)
(86) Internationale Anmeldenummer: PCT/CN2016/083290
(87) Internationale Veröffentlichungsnummer: WO 2016/188429

(57) **Zusammenfassung**

Es werden ein Wärmemanagementmodul und dessen Drehventil bereitgestellt. Das Wärmemanagementmodul umfasst ein mit einer Öffnung versehenes Gehäuse (6); ein im Gehäuse (6) angeordnetes und eine Passage aufweisendes Drehventil (V), wobei die Passage über die Öffnung des Gehäuses (6) mit dem Außenteil verbunden ist; und eine in der Öffnung des Gehäuses (6) angeordnete Dichtungsgruppe, wobei die Dichtungsgruppe ein Hauptdichtungsteil (7), ein Nebendichtungsteil (8) und eine Dichtungsteilhalterung (9) umfasst, die Dichtungsteilhalterung (9) einen zylinderförmigen Teil (92) und eine hervorstehende Kante (91) aufweist, das Hauptdichtungsteil (7) und das Nebendichtungsteil (8) in Axialrichtung der Öffnung nacheinander in dem Raum zwischen der hervorstehenden Kante der Dichtungsteilhalterung, dem zylinderförmigen Teil und dem Gehäuse (6) angeordnet sind, das Hauptdichtungsteil (7) in Axialrichtung der Öffnung in Kontakt zu dem Drehventil steht und das Nebendichtungsteil (8) verwendet wird, um zwischen dem Gehäuse (6) und der Dichtungsteilhalterung (9) eine Dichtung zu realisieren, wobei das Hauptdichtungsteil (7) lose mit der Dichtungsteilhalterung (9) und lose mit dem Gehäuse (6) kombiniert ist.

## Beschreibung

### Technisches Gebiet

Die vorliegende Anmeldung betrifft ein Wärmemanagementmodul und dessen Drehventil.

### Allgemeiner Stand der Technik

Die Verwendung von Wärmemanagementmodulen in Motoren ist bereits allgemein bekannt. Wärmemanagementmodule können die Motortemperatur genau steuern, um die Vorwärmzeit zu verringern und die Effizienz von Motor, Getriebe und Turbolader etc. zu erhöhen und sie sind gleichzeitig hilfreich für die Erhöhung der Effizienz der Fahrzeugkomponenten sowie von deren Lebensdauer.

So legt beispielsweise die Patentschrift DE 10 2013 209 582 A1 ein Wärmemanagementmodul offen. Das Wärmemanagementmodul weist mehrere Drehventile sowie Dichtungsteile zur Abdichtung der Drehventile auf. Die Drehventile sind im Gehäuse des Wärmemanagementmoduls angeordnet und rotieren in diesem und die Drehventile weisen mehrere kreisförmige Auslassöffnungen zur Verbindung mit Kühlpassagen im Außenteil des Gehäuses auf. Die Dichtungsteile sind zwischen den Auslassöffnungen der Drehventile und dem Gehäuse angeordnet und werden durch Federn mit einem Druck beaufschlagt. Die Drehventile rotieren, um die Leitungen des Kühlsystems eines Motors, wie beispielsweise Kühlpassagen, anzusteuern. Die Auslassöffnungen der Drehventile des Wärmemanagementmoduls sind in Bezug auf die Querschnittsfläche der Drehventile symmetrische Öffnungen. Die Dichtungsteile sind in Bezug auf das Gehäuse des Wärmemanagementmoduls befestigt. Somit tritt zwischen den drehbaren Drehventilen und den befestigten Dichtungsteilen ein erhebliches Verschleißverhalten auf und nach einem Betrieb der Drehventile über einen langen Zeitraum wird möglicherweise die Dichtung unwirksam.

Deshalb besteht in Bezug auf Wärmemanagementmodule des Stands der Technik weiterer Verbesserungsbedarf.

### Kurzdarstellung der Erfindung

Die Aufgabe der vorliegenden Erfindung ist die Bereitstellung eines Wärmemanagementmoduls und dessen Drehventils, wobei durch die Verringerung der Drehmomentanforderungen des Wärmemanagementmoduls und dessen Drehventils ein besseres Positionsveränderungsverhalten bzw. ein kleinerer Drehmomentspitzenwert und außerdem ein verbessertes Verschleißverhalten zwischen Drehventil und Dichtungsteil bzw. ein geringerer Verschleiß des Dichtungsteils bereitgestellt werden können.

Die vorliegende Erfindung löst die obenstehende Aufgabe durch die Bereitstellung des folgenden Wärmemanagementmoduls.

Die vorliegende Erfindung stellt ein Wärmemanagementmodul bereit, umfassend ein Gehäuse, welches eine Öffnung aufweist; ein Drehventil, das in dem Gehäuse angeordnet ist und eine Passage aufweist, welche über die Öffnung des Gehäuses mit dem Außenteil verbunden ist; und eine Dichtungsgruppe, die in der Öffnung des Gehäuses angeordnet ist, dadurch gekennzeichnet, dass die Dichtungsgruppe ein Hauptdichtungsteil, ein Nebendichtungsteil und eine Dichtungsteilhalterung umfasst, wobei die Dichtungsteilhalterung einen hohlen zylinderförmigen Teil und eine mit dem axialen Endteil des zylinderförmigen Teils verbundene hervorstehende Kante aufweist, das Hauptdichtungsteil und das Nebendichtungsteil in Axialrichtung der Öffnung nacheinander in dem Raum zwischen der hervorstehenden Kante und dem zylinderförmigen Teil der Dichtungstellhalterung sowie dem Gehäuse angeordnet sind, das Hauptdichtungsteil in Axialrichtung der Öffnung in Kontakt zu dem Drehventil steht und verwendet wird, um das Drehventil abzudichten und das Nebendichtungsteil in Axialrichtung der Öffnung mit dem einen Ende an dem Hauptdichtungsteil anliegt und mit dem anderen Ende an der hervorstehenden Kante anliegt und es verwendet wird, um eine Dichtung zwischen dem Gehäuse und der Dichtungsteilhalterung zu realisieren, wobei das Hauptdichtungsteil lose mit der Dichtungsteilhalterung der Dichtungsgruppe kombiniert ist und lose mit dem Gehäuse des Wärmemanagementmoduls kombiniert ist.

Durch die lose Kombination des Hauptdichtungsteils mit dem Gehäuse bzw. mit der Dichtungsteilhalterung wird die Rotation des Dichtungsteils ermöglicht. Das rotierende Hauptdichtungsteil unterliegt einem gleichmäßigen Verschleiß, womit der Verschleiß verringert wird, und gleichzeitig bewahrt es über die gesamte Lebensdauer des Wärmemanagementmoduls gute Dichtungseigenschaften.

Vorzugsweise ist der Innendurchmesser der Öffnung der Passage des Drehventils kleiner als der Innendurchmesser des Hauptdichtungsteils. Somit wird im Betrieb des Drehventils ein Drehmomentspitzenwert bei einer Positionsveränderung verhindert.

Vorzugsweise ist die Öffnung der Passage des Drehventils in Bezug auf die Axialrichtung des Drehventils eine asymmetrische Öffnung.

Durch eine konstruktive Änderung der Öffnung im Drehventil und konkret durch die Konstruktion einer asymmetrischen Öffnung wird ein Drehmomentspitzenwert im Betrieb des Drehventils verhindert. Die asymmetrische Öffnung im Drehventil erzeugt eine am Hauptdichtungsteil wirkende asymmetrische Kraft, womit sich das Drehmoment für die Rotation des Dichtungsteils erhöht.

Vorzugsweise ist die asymmetrische Öffnung eine erste asymmetrische Öffnung und das Drehventil weist in Radialrichtung an seiner der ersten asymmetrischen Öffnung entgegengesetzten Seite eine zweite asymmetrische Öffnung auf.

Vorzugsweise weisen die erste asymmetrische Öffnung und die zweite asymmetrische Öffnung in einander entgegengesetzte Richtungen.

Das Drehventil weist mehrere asymmetrische Öffnungen auf, wobei die asymmetrischen Öffnungen an entgegengesetzten Seiten des Drehventils in entgegengesetzte Richtungen weisen. Somit rotieren die für entgegengesetzte Passagen verwendeten Hauptdichtungsteile in entgegengesetzten Richtungen, um die durch die Rotation der Hauptdichtungsteile am Drehventil verursachte axiale Gegenkraft zu kompensieren.

Vorzugsweise weisen die asymmetrischen Öffnungen des Drehventils eine in Bezug auf die Axialrichtung des Drehventils schräge Trennlinie auf.

Durch eine konstruktive Änderung der für das Drehventil verwendeten Trennlinie wird ein Drehmomentspitzenwert im Betrieb des Drehventils zusätzlich verhindert.

Die vorliegende Erfindung stellt weiterhin ein für das Wärmemanagementmodul verwendetes Drehventil bereit, wobei das Drehventil eine Passage aufweist, um mit dem Außenteil des Wärmemanagementmoduls verbunden zu werden, dadurch gekennzeichnet, dass die Öffnung der Passage des Drehventils in Bezug auf die Axialrichtung des Drehventils asymmetrisch ist.

### Beschreibung der beigefügten Figuren

Diese und weitere Ziele sowie Vorteile der vorliegenden Erfindung werden in der folgenden Beschreibung und in Verbindung mit den beigefügten Figuren ausführlicher dargestellt, wobei alle gleichen in den beigefügten Figuren verwendeten Bezugszeichen sich auf die gleichen oder auf ähnliche Bauteile beziehen.
Fig. 1 zeigt eine Perspektivdarstellung eines Drehventils in einem Wärmemanagementmodul des Stands der Technik.
Fig. 2 zeigt eine vergleichende Darstellung der abgewickelten Flächen der Öffnungen eines Drehventils in einem Wärmemanagementmodul der vorliegenden Erfindung und der entsprechenden Öffnungen des Stands der Technik in übereinanderliegender Form.
Fig. 3 zeigt eine vergleichende Darstellung der abgewickelten Flächen der Öffnungen eines Drehventils in einem Wärmemanagementmodul der vorliegenden Erfindung und der entsprechenden Öffnungen des Stands der Technik in separierter Form.
Fig. 4 zeigt eine vergleichende Darstellung der abgewickelten Flächen der Öffnungen eines Drehventils in einem Wärmemanagementmodul der vorliegenden Erfindung und der entsprechenden Öffnungen des Stands der Technik in übereinanderliegender Form.
Fig. 5 zeigt eine vergleichende Darstellung der abgewickelten Flächen der Öffnungen eines Drehventils in einem Wärmemanagementmodul der vorliegenden Erfindung und der entsprechenden Öffnungen des Stands der Technik in separierter Form.
Fig. 6 zeigt eine Schnittdarstellung einer Dichtungsgruppe in einem Wärmemanagementmodul der vorliegenden Erfindung.
Fig. 7 zeigt eine schematische Darstellung einer mit einem Drehventil kombinierten Dichtungsgruppe in einem Wärmemanagementmodul der vorliegenden Erfindung.

### Ausführungsformen

Im Folgenden wird das Wärmemanagementmodul der vorliegenden Erfindung in Verbindung mit den beigefügten Figuren detailliert beschrieben.

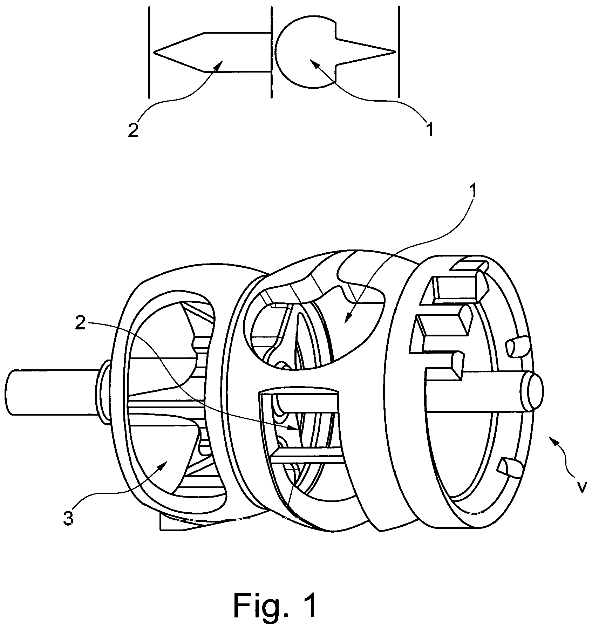

Fig. 1 zeigt eine Perspektivdarstellung eines Drehventils in einem Wärmemanagementmodul des Stands der Technik. Wie in Fig. 1 gezeigt, weist ein Drehventil V in einem Wärmemanagementmodul des Stands der Technik mehrere Passagen auf, beispielsweise drei Passagen. Die Passagen weisen Öffnungen auf, beispielsweise eine Öffnung 1, eine Öffnung 2 und eine Öffnung 3. Jede der Öffnungen 1, 2 und 3 ist in Bezug auf die entsprechende Querschnittsfläche des Drehventils V symmetrisch. Mit anderen Worten ist jede der Öffnungen 1, 2 und 3 in Axialrichtung des Drehventils V links und rechts symmetrisch. Die Öffnung 1 und die Öffnung 2 sind nacheinander in Umfangsrichtung des Drehventils angeordnet und die Öffnung 3 ist in Axialrichtung des Drehventils an einer Seite der Öffnung 1 und der Öffnung 2 angeordnet.

Der obere Teil in Fig. 1 zeigt eine verkleinerte Darstellung der abgewickelten Flächen der Öffnung 1 und der Öffnung 2. Dabei ist anzumerken, dass zur Vereinfachung der Darstellung die abgewickelten Flächen im oberen Teil von Fig. 1 gegenüber der Öffnung 1 und der Öffnung 2 im unteren Teil von Fig. 1 um 90 Grad gedreht wurden. In der Darstellung der abgewickelten Flächen hat die Öffnung 1 in etwa die Form einer Reißzwecke und besteht konkret aus einem Basisteil und einem von der geraden Kante des Basisteils hervorstehenden spitzen Endteil, wobei der Basisteil die Form eines Kreises aufweist, von dem ein kleinerer Teil abgeschnitten wurde. Die Öffnung 2 bildet in etwa eine Keilform und besteht konkret aus einem rechteckigen Basisteil und einem von der einen Seite des Basisteils hervorstehenden winkelförmigen Teil.

Die Öffnung 1, die Öffnung 2 und die Öffnung 3 des Drehventils V in dem Wärmemanagementmodul des Stands der Technik weisen jeweils parallel zur Axialrichtung des Drehventils liegende Trennlinien auf.

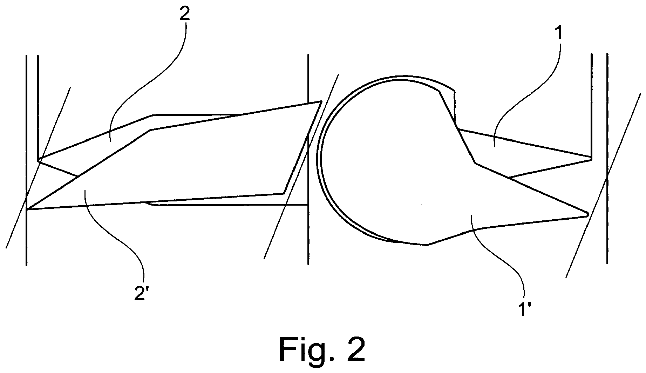

Fig. 2 zeigt eine vergleichende Darstellung der abgewickelten Flächen der Öffnungen eines Drehventils in einem Wärmemanagementmodul der vorliegenden Erfindung und der entsprechenden Öffnungen des Stands der Technik in übereinanderliegender Form. Wie in Fig. 2 gezeigt, ist im Vergleich mit der Öffnung 1 und der Öffnung 2 des Stands der Technik bei der vorliegenden Erfindung jeweils ein Teil der Öffnung 1' und der Öffnung 2' in Axialrichtung des Drehventils in Richtung auf eine Seite versetzt und konkret ist der spitze Endteil der Öffnung 1' in Axialrichtung des Drehventils in Richtung auf eine Seite versetzt und der winkelförmige Teil der Öffnung 2' ist in Axialrichtung des Drehventils in Richtung auf die eine Seite versetzt. Gleichzeitig ist der ungefähr rechteckige Endteil der Öffnung 2' in Axialrichtung des Drehventils in Richtung auf die andere Seite versetzt, welche der einen Seite, in deren Richtung der winkelförmige Teil der Öffnung 2' versetzt ist, entgegengesetzt ist und bildet somit einen spitzwinkligen spitzen Endteil. Das heißt, der spitze Endteil der Öffnung 1' ist nur in Axialrichtung des Drehventils in Richtung auf eine Seite versetzt, während der ungefähr rechtwinklige Endteil und der winkelförmige Teil der Öffnung 2' in Richtung auf die beiden in Axialrichtung des Drehventils entgegengesetzten Seiten versetzt sind. Somit sind die Öffnung 1' und die Öffnung 2' in Axialrichtung des Drehventils asymmetrisch.

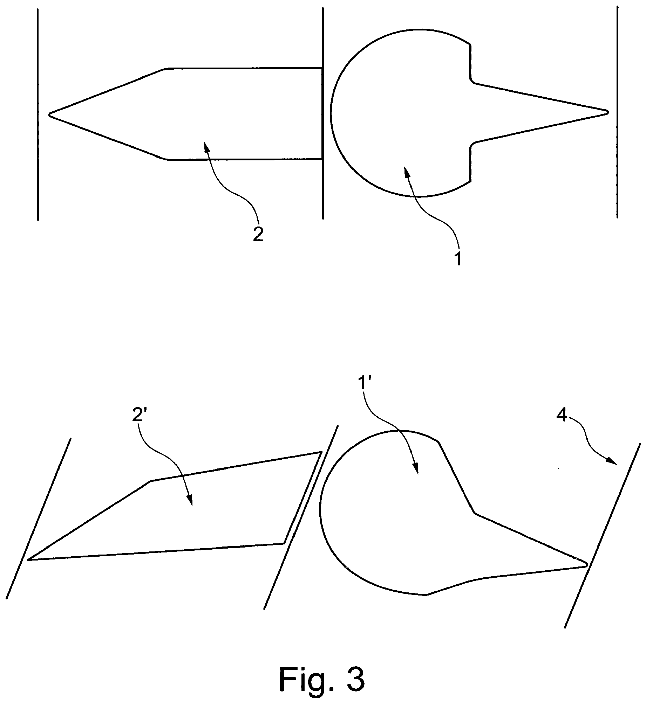

Fig. 3 zeigt eine vergleichende Darstellung der abgewickelten Flächen der Öffnungen eines Drehventils in einem Wärmemanagementmodul der vorliegenden Erfindung und der entsprechenden Öffnungen des Stands der Technik in separierter Form. Wie in Fig. 3 gezeigt, ist im Vergleich mit der symmetrischen Öffnung eines Drehventils des Stands der Technik die Öffnung 1' der vorliegenden Erfindung asymmetrisch und weist eine in Bezug auf die Axialrichtung des Drehventils schräge Trennlinie 4 auf. Analog ist die Öffnung 2' ebenfalls asymmetrisch und weist eine in Bezug auf die Axialrichtung des Drehventils schräge Trennlinie auf.

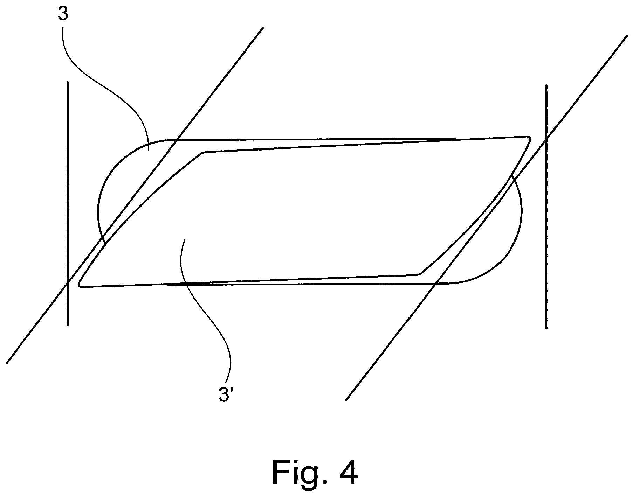

Fig. 4 zeigt eine vergleichende Darstellung der abgewickelten Flächen der Öffnungen eines Drehventils in einem Wärmemanagementmodul der vorliegenden Erfindung und der entsprechenden Öffnungen des Stands der Technik in übereinanderliegender Form. Wie in Fig. 4 gezeigt, bildet in der Darstellung der abgewickelten Flächen die Öffnung 3 des Stands der Technik in etwa die Form einer Laufbahn und weist konkret einen rechteckigen Basisteil und zwei ungefähr halbkreisförmige Endteile auf, wobei die beiden ungefähr halbkreisförmigen Endteile in senkrechter Richtung zur Axialrichtung des Drehventils V von den Seitenkanten des Basisteils der Öffnung 3 in Richtung auf die beiden Seiten hervorstehen. Im Vergleich mit den halbkreisförmigen Endteilen der Öffnung 3 des Stands der Technik sind die Endteile der Öffnung 3' der vorliegenden Erfindung zu einer spitzwinkligen Form umgebildet. Konkret ist ein Teil des Endteils der Öffnung 3' in Axialrichtung des Drehventils in Richtung auf eine Seite versetzt und der andere Teil des Endteils der Öffnung 3' ist in Axialrichtung des Drehventils in Richtung auf die andere Seite versetzt. Somit ist die Öffnung 3' in Axialrichtung des Drehventils asymmetrisch.

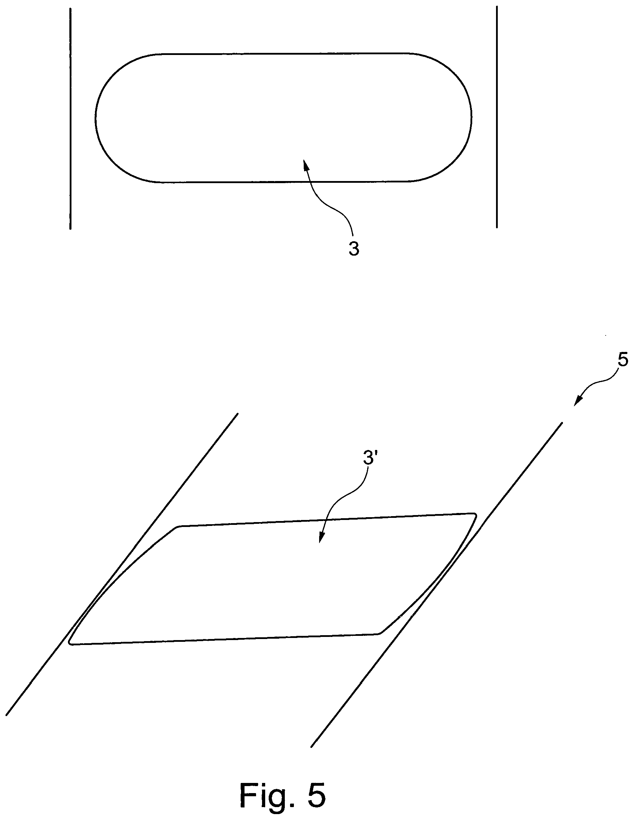

Fig. 5 zeigt eine vergleichende Darstellung der abgewickelten Flächen der Öffnungen eines Drehventils in einem Wärmemanagementmodul der vorliegenden Erfindung und der entsprechenden Öffnungen des Stands der Technik in separierter Form. Wie in Fig. 5 gezeigt, ist im Vergleich mit der symmetrischen Öffnung 3 eines Drehventils des Stands der Technik die Öffnung 3' der vorliegenden Erfindung asymmetrisch und weist eine in Bezug auf die Axialrichtung des Drehventils schräge Trennlinie 5 auf.

Darüber hinaus kann das Drehventil an seinen in Radialrichtung entgegengesetzten Seiten jeweils eine asymmetrische Öffnung aufweisen. Das heißt, dass das Drehventil an seinen in Radialrichtung entgegengesetzten Seiten mehrere asymmetrische Öffnungen aufweisen kann. Unter diesen Umständen weisen die asymmetrischen Öffnungen im Drehventil an entgegengesetzten Seiten des Drehventils in einander entgegengesetzte Richtungen. Somit rotieren die für entgegengesetzte Passagen verwendeten Hauptdichtungsteile in entgegengesetzte Richtungen, um die am Drehventil durch die Rotation der Hauptdichtungsteile verursachte axiale Gegenkraft zu kompensieren.

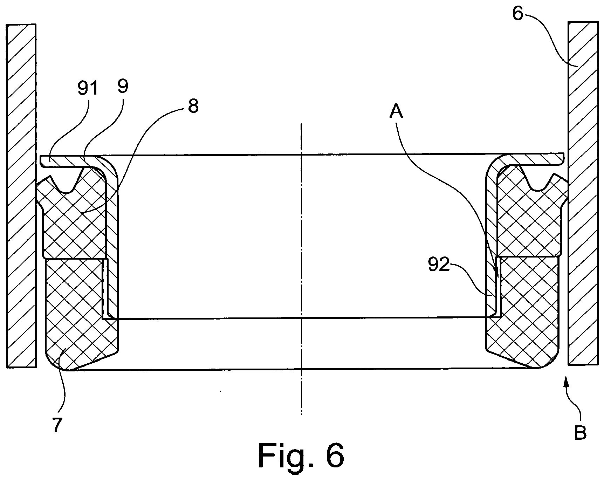

Fig. 6 zeigt eine Schnittdarstellung einer Dichtungsgruppe in einem Wärmemanagementmodul der vorliegenden Erfindung. Wie in Fig. 6 gezeigt, ist die Dichtungsgruppe in der Öffnung des Gehäuses 6 des Wärmemanagementmoduls montiert. Über diese Öffnung ist das Drehventil des Wärmemanagementmoduls mit dem Kühlkanal des Außenteils verbunden. Die Dichtungsgruppe umfasst ein Hauptdichtungsteil 7, ein Nebendichtungsteil 8 und eine Dichtungsteilhalterung 9. Das Hauptdichtungsteil 7 der Dichtungsgruppe kann in direkten Kontakt mit dem Drehventil treten und die Dichtungsteilhalterung 9 wird über eine Feder (nicht dargestellt) befestigt. Konkret ist das eine Ende der Feder am Gehäuse 6 befestigt und das andere Ende liegt an der Dichtungsteilhalterung 9 an. Durch die Verwendung dieser Feder wird sichergestellt, dass das Hauptdichtungsteil 7 mit ausreichender Spannkraft gegen das Drehventil gedrückt wird.

Die Dichtungsteilhalterung 9 umfasst einen hohlen zylinderförmigen Teil 92 und eine mit dem axialen Endteil des zylinderförmigen Teils 92 verbundene hervorstehende Kante 91. Zwischen dem zylinderförmigen Teil 92 der Dichtungsteilhalterung 9 und dem Gehäuse 6 des Wärmemanagementmoduls ist ein Raum vorhanden. Das Hauptdichtungsteil 7 und das Nebendichtungsteil 8 sind ungefähr ringförmig und jeweils in dem Raum zwischen der Dichtungsteilhalterung 9 und dem Gehäuse 6 des Wärmemanagementmoduls montiert. Das Hauptdichtungsteil 7 steht mit dem Drehventil V in Kontakt, um das Drehventil V abzudichten und das Nebendichtungsteil 8 steht zum einen mit der Innenwand des Gehäuses 6 und zum anderen mit der Außenwand des zylinderförmigen Teils 92 der Dichtungsteilhalterung 9 in Kontakt, um zwischen dem Gehäuse 6 des Wärmemanagementmoduls und der Dichtungsteilhalterung 9 eine Dichtung zu realisieren. Das Nebendichtungsteil 8 ist in Radialrichtung des Drehventils V an der Außenseite des Hauptdichtungsteils 7 angeordnet und liegt am Hauptdichtungsteil 7 an. Gleichzeitig ist die hervorstehende Kante 91 der Dichtungsteilhalterung 9 in Radialrichtung des Drehventils V an der Außenseite des Nebendichtungsteils 8 angeordnet und liegt am Nebendichtungsteil 8 an.

Die radiale Innenseite des Hauptdichtungsteils 7 der Dichtungsgruppe ist von dem zylinderförmigen Teil 92 der Dichtungsteilhalterung 9 abgeteilt, sodass zwischen beiden ein Zwischenraum A gebildet wird. Die radiale Außenseite des Hauptdichtungsteils 7 der Dichtungsgruppe ist von dem Gehäuse 6 des Wärmemanagementmoduls abgeteilt, sodass zwischen beiden ein Zwischenraum B gebildet wird. Da das Hauptdichtungsteil 7 jeweils von der Dichtungsteilhalterung 9 und dem Gehäuse 6 des Wärmemanagementmoduls abgeteilt ist, ist das Hauptdichtungsteil 7 lose mit der Dichtungsteilhalterung 9 und lose mit dem Gehäuse 6 des Wärmemanagementmoduls kombiniert. Somit kann das Hauptdichtungsteil 7 gleichzeitig mit der Rotation des Drehventils V rotieren. Darüber hinaus weist das Hauptdichtungsteil 7 an dem nahe dem Drehventil befindlichen Endteil einen Hakenteil auf und das Hauptdichtungsteil 7 ist über diesen Hakenteil am Endteil des zylinderförmigen Teils 92 der Dichtungsteilhalterung 9 angehängt, sodass eine Verschiebung des Huptdichtungsteils 7 in Axialrichtung des zylinderförmigen Teils 92 begrenzt wird.

Durch eine Anpassung des Außen- und Innendurchmessers des Hauptdichtungsteils 7 können in Radialrichtung des Hauptdichtungsteils 7 die benötigten Zwischenräume gebildet werden. Die Dichtungsfunktion zwischen dem Hauptdichtungsteil 7 und dem Nebendichtungsteil 8 wird nur in Axialrichtung der Dichtungsgruppe realisiert.

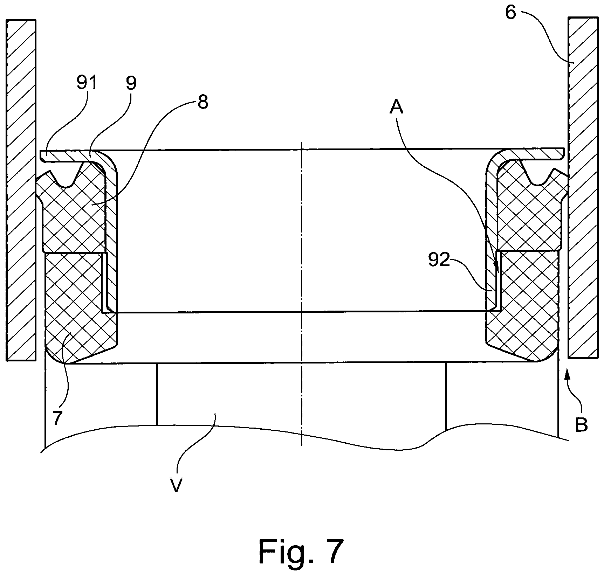

Fig. 7 zeigt eine schematische Darstellung einer mit einem Drehventil kombinierten Dichtungsgruppe in einem Wärmemanagementmodul der vorliegenden Erfindung. Es ist anzumerken, dass in Fig. 7 lediglich der die Öffnung umfassende Teil des Drehventils V dargestellt ist, während auf die anderen Teile verzichtet wurde. Wie in Fig. 7 gezeigt, steht das Hauptdichtungsteil 7 der Dichtungsgruppe in Kontakt mit dem Umfangskantenteil der Öffnung des Drehventils und drückt gleichzeitig gegen diesen, womit es die Dichtung des Drehventils realisiert. Im Betrieb des Drehventils können sich die übereinanderliegenden Teile des Innenlochs des Hauptdichtungsteils 7 und der Öffnung des Drehventils allmählich verändern und somit kann sich die Flussmenge verändern, welche die Öffnung des Drehventils durchströmt. Wenn die übereinanderliegenden Teile des Innenlochs des Hauptdichtungsteils 7 und der Öffnung des Drehventils genau übereinanderliegen, ist die Flussmenge, welche die Öffnung des Drehventils durchströmt, am größten.

Darüber hinaus kann über die Einstellung der axialen Vorspannkraft der Dichtungsgruppe, wie beispielsweise über eine Änderung der Steifigkeit der Feder, die Rotation des Hauptdichtungsteils 7 gesteuert werden. Wegen des gleichmäßigen Verschleißes des Dichtungsteils und des relativ kleinen Reibungsdrehmoments am Drehventil ist die benötigte axiale Vorspannkraft gering.

Die Trennlinien der Öffnungen des Drehventils des Wärmemanagementmoduls der vorliegenden Erfindung sind in Bezug auf die Axialrichtung des Drehventils schräg, d. h. sie sind nicht parallel zur Axialrichtung des Drehventils und sie liegen auch nicht senkrecht zu dieser, womit eine Kraft/ein Drehmoment erzeugt wird, welche/s das Hauptdichtungsteil rotieren lässt und womit außerdem ein Drehmomentspitzenwert bei einer Positionsveränderung verhindert wird.

Außerdem ist der Innendurchmesser der Öffnung der Passage des Drehventils vorzugsweise kleiner als der Innendurchmesser des Hauptdichtungsteils 7, womit zusätzlich ein Drehmomentspitzenwert bei einer Positionsveränderung verhindert wird.

Es ist klar, dass an der vorliegenden Erfindung alle Arten von Veränderungen und Korrekturen vorgenommen werden können, ohne dass die in den Patentansprüchen festgelegte Idee und der Umfang der vorliegenden Erfindung verlassen werden.

## Patentansprüche

1. Ein Wärmemanagementmodul, umfassend:
ein Gehäuse (6), wobei an dem Gehäuse (6) eine Öffnung angeordnet ist;
ein Drehventil (V), das im Gehäuse (6) angeordnet ist und eine Passage aufweist, wobei die Passage über die Öffnung des Gehäuses (6) mit dem Außenteil verbunden ist; und
eine Dichtungsgruppe, die in der Öffnung des Gehäuses (6) angeordnet ist,
**dadurch gekennzeichnet, dass**
die Dichtungsgruppe Folgendes umfasst: ein Hauptdichtungsteil (7), ein Nebendichtungsteil (8) und eine Dichtungsteilhalterung (9), wobei die Dichtungsteilhalterung (9) einen hohlen zylinderförmigen Teil (92) und eine mit dem axialen Endteil des zylinderförmigen Teils (92) verbundene hervorstehende Kante (91) aufweist, das Hauptdichtungsteil (7) und das Nebendichtungsteil (8) in Axialrichtung der Öffnung nacheinander in dem Raum zwischen der hervorstehenden Kante (91) und dem zylinderförmigen Teil (92) der Dichtungsteilhalterung (9) sowie dem Gehäuse (6) angeordnet sind, das Hauptdichtungsteil (7) in Axialrichtung der Öffnung in Kontakt zu dem Drehventil (V) steht und verwendet wird, um das Drehventil (V) abzudichten und das Nebendichtungsteil (8) in Axialrichtung der Öffnung mit dem einem Ende an dem Hauptdichtungsteil (7) anliegt, mit dem anderen Ende an der hervorstehenden Kante (91) anliegt und verwendet wird, um eine Dichtung zwischen dem Gehäuse (6) und der Dichtungsteilhalterung (9) zu realisieren,
wobei das Hauptdichtungsteil (7) lose mit der Dichtungsteilhalterung (9) der Dichtungsgruppe kombiniert ist und lose mit dem Gehäuse (6) des Wärmemanagementmoduls kombiniert ist.

2. Wärmemanagementmodul nach Anspruch 1, **dadurch gekennzeichnet, dass** der Innendurchmesser der Öffnung der Passage des Drehventils kleiner ist als der Innendurchmesser des Hauptdichtungsteils.

3. Wärmemanagementmodul nach einem der Ansprüche 1 oder 2, **dadurch gekennzeichnet, dass** die Öffnung der Passage des Drehventils in Bezug auf die Axialrichtung des Drehventils eine asymmetrische Öffnung ist.

4. Wärmemanagementmodul nach Anspruch 3, **dadurch gekennzeichnet, dass** die asymmetrische Öffnung eine erste asymmetrische Öffnung ist,
wobei das Drehventil in Radialrichtung an seiner der ersten asymmetrischen Öffnung entgegengesetzten Seite eine zweite asymmetrische Öffnung aufweist.

5. Wärmemanagementmodul nach Anspruch 4, **dadurch gekennzeichnet, dass** die erste asymmetrische Öffnung und die zweite asymmetrische Öffnung in jeweils entgegengesetzte Richtungen weisen.

6. Wärmemanagementmodul nach Anspruch 3, **dadurch gekennzeichnet, dass** die asymmetrischen Öffnungen des Drehventils eine in Bezug auf die Axialrichtung des Drehventils schräge Trennlinie aufweisen.

7. Ein in einem Wärmemanagementmodul nach einem der Ansprüche 1 bis 6 verwendetes Drehventil (V), wobei das Drehventil (V) eine Passage aufweist, die mit dem Außenteil des Wärmemanagementmoduls verbunden ist,
**dadurch gekennzeichnet, dass** die Öffnung der Passage des Drehventils (V) in Bezug auf die Axialrichtung des Drehventils asymmetrisch ist.

8. Wärmemanagementmodul nach Anspruch 7, **dadurch gekennzeichnet, dass** die asymmetrische Öffnung eine erste asymmetrische Öffnung ist,
wobei das Drehventil in Radialrichtung an seiner der ersten asymmetrischen Öffnung entgegengesetzten Seite eine zweite asymmetrische Öffnung aufweist.

9. Wärmemanagementmodul nach Anspruch 8, **dadurch gekennzeichnet, dass** die erste asymmetrische Öffnung und die zweite asymmetrische Öffnung in jeweils entgegengesetzte Richtungen weisen.

10. Wärmemanagementmodul nach Anspruch 7, **dadurch gekennzeichnet, dass** die asymmetrischen Öffnungen des Drehventils eine in Bezug auf die Axialrichtung des Drehventils schräge Trennlinie aufweisen.
